# EUROPEAN PATENT SPECIFICATION

(11) **EP 4 566 906 B1**
(45) Date of publication and mention of the grant of the patent: **01.04.2026**
(21) Application number: 23213999.8
(22) Date of filing: 04.12.2023
(51) Int. Cl.: B60W 40/12

(54) **A METHOD FOR DETERMINING A TRAILER CONNECTION STATUS FOR A VEHICLE, AND A SYSTEM FOR DETERMINING A TRAILER CONNECTION STATUS OF A VEHICLE**
VERFAHREN ZUR BESTIMMUNG EINES ANHÄNGERVERBINDUNGSSTATUS FÜR EIN FAHRZEUG UND SYSTEM ZUR BESTIMMUNG EINES ANHÄNGERVERBINDUNGSSTATUS EINES FAHRZEUGS
PROCÉDÉ DE DÉTERMINATION D'UN ÉTAT DE CONNEXION DE REMORQUE POUR UN VÉHICULE ET SYSTÈME DE DÉTERMINATION D'UN ÉTAT DE CONNEXION DE REMORQUE D'UN VÉHICULE

(43) Date of publication of application: 11.06.2025
(73) Proprietor: VOLVO TRUCK CORPORATION, 405 08 Göteborg (SE)
(72) Inventor: BALASUBRAMANIAN, Subhash, 641046 Coimbatore (IN)
(74) Representative: Zacco Sweden AB

(56) References cited:
- US-A1- 2022 363 270
- US-B1- 11 787 418
- US-B1- 9 311 761

## Description

### TECHNICAL FIELD

The disclosure relates generally to transportation using vehicles with trailers. In particular aspects, the disclosure relates to a method for determining a trailer connection status for a vehicle, and a system for determining a trailer connection status of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Transport vehicles are vital in today's society for efficient transportation of materials and goods. The speed within and complexity of logistics chains together with the ever-growing need for more cost-efficient transportation require more flexible transport solutions. By way of example, the number of loading and unloading events for a given vehicle increases with increased demand and the shorter lead times that are required. The number of loading or unloading events may further require that a trailer needs to be connected or unconnected to the vehicle towing the trailer multiple of times within the logistic chain. Thus, the connection status of the vehicle may change frequently. The connection status of the trailer and vehicle is, however, safety critical, for the vehicle as well as for its surroundings. There is therefore a need for reliable methods and systems that can support the driver and/or fleet management system in determining if the trailer and vehicle is connected or not.

The document US 9 311 761 B1 describes a method for identifying a low friction surface from a road surface with a slope for a vehicle, which involves calculating a road slope angle based on the calculated vehicle load and calculated normal load.

### SUMMARY

According to a first aspect of the disclosure, there is provided a method for determining a trailer connection status for a vehicle, the vehicle comprising: a trailer hitch arrangement arranged to connect with a coupler of a trailer such that the vehicle and the trailer are mechanically connected; an air suspension pressure sensor configured to determine air pressure in an air suspension system of the vehicle; a tire pressure sensor configured to determine tire pressure inside a tire of the vehicle, and a control unit communicatively connected with the air suspension pressure sensor and with the tire pressure sensor, wherein the method comprises: determining, at a first point in time, T1, by the air suspension pressure sensor a first air suspension pressure value, PAS1, and, by the tire pressure sensor a corresponding first tire pressure value, PT1; determining, at a second point in time, T2, by the air suspension pressure sensor a second air suspension pressure value, PAS2, and, by the tire pressure sensor a corresponding second tire pressure value, PT2, the second point in time, T2, being after the first point in time, T1; receiving, by the control unit, the first and the second air suspension pressure values, PAS1, PAS2 and the first and the second tire pressure values PT1, PT2, to determine an air suspension pressure difference value, ΔPAS, and to determine a tire pressure difference value, ΔPT; and determining, by the control unit, the trailer connection status based on the determined air suspension and tire pressure difference values, ΔPAS, ΔPT, the trailer connection status being indicative of if the trailer is mechanically connected to the vehicle.

The first aspect of the disclosure may seek to provide a more reliable method for determining the connection status of a vehicle and a trailer. Problems associated with knowing if the trailer is connected or not to the vehicle may thereby be mitigated. A technical benefit may include that a more consistent method for determining the connection status of the vehicle and the trailer is provided. Another advantage is that a safer operation of the vehicle may be provided. A more efficient method is moreover provided. A less complex determining of the connection status of the vehicle and trailer may further be obtained. By way of example, fewer systems or features need to be added to the vehicle and the trailer respective to ensure a robust determining if the trailer is connected to the vehicle. A more cost-effective solution may be provided for the user and/or owner of the vehicle and/or trailer. The vehicle may be a heavy-duty vehicle. The heavy-duty vehicle may be a truck, bus, or a construction equipment.

The tire pressure sensor may form part of a tire pressure sensor system comprising a plurality of tire pressure sensors. An improved determining of tire pressure values for the vehicle may thereby be provided. The tire pressure sensor system may be configured to determine tire pressure in one or more tires of the vehicle. Each tire of the vehicle may comprise a tire pressure sensor. The tire pressure sensor system may be configured to determine tire pressures value changes between different tires of the wire. By way of example, the tire pressure sensor system may compare tire pressure values between the front tires and the back tires of the vehicle. The tire pressure between pairs of tires, such as the back tires, may be averaged for increased precision.

The tire pressure sensor system may be referred to as a tire pressure monitoring system, TPMS.

Optionally in some examples, including in at least one preferred example, the trailer connection status is in a connected state if the coupler of the trailer is mechanically connected to the trailer hitch arrangement or in an unconnected state if the coupler of the trailer is detached from the trailer hitch arrangement. A technical benefit may include that a well-defined status of the trailer connection is provided. A safer operation of the vehicle may thereby be provided. A more efficient handling of the transport of goods or material may be provided.

The trailer connection status may comprise an indication of if the trailer and the vehicle are connected. Put differently, the state of the trailer connection status is based on sensor data pertaining to the air suspension pressure difference value and the tire pressure difference value or values.

Optionally in some examples, including in at least one preferred example, the determined trailer connection status is in the connected state if the air suspension pressure difference value, ΔPAS, is larger than a first threshold value and the tire pressure difference value, ΔPT, is larger than a second threshold value. A technical benefit may include that a more reliable determining of the trailer connection status is provided. Pressure value data pertaining to true changes in pressure values as a result of the mechanical coupling or uncoupling of the trailer to the vehicle may thereby be distinguished from spurious sensor data pertaining to other pressure changes in the tire pressure and/or air suspension pressure. By way of example, pressure changes to the tire and/or air suspension pressure resulting from the vehicle driving on a bumpy road may be discriminated.

Optionally in some examples, including in at least one preferred example, the determined trailer connection status is in the connected state if the air suspension pressure difference value, ΔPAS, is within a first threshold value range and the tire pressure difference value, ΔPT, is within a second threshold value range. Pressure changes to the tire pressure and/or air suspension pressure falling outside the first and second threshold value ranges may thereby be discriminated. A more reliable method is thereby provided. By way of example, pressure changes to the tires and/or air suspension pressure resulting from the vehicle driving or the vehicle being loaded may be discriminated. The first and/or second threshold value ranges may be predetermined. The ranges may be predetermined by determining pressure value data for the vehicle, i.e. tire pressure and/or air suspension pressure, pertaining to the connecting of the trailer to the vehicle. Pressure data values pertaining to the connected state and the unconnected state may be determined.

Optionally in some examples, including in at least one preferred example, the trailer connection status is in the connected state if the sum of the air suspension pressure difference value, ΔPAS, and the tire pressure difference value, ΔPT, is larger than a third threshold value. A technical benefit may include that a more reliable method is provided. Pressure data values pertaining to known changes in pressures for the tires and the air suspension may thereby be used. The first, second and/or third pressure threshold values may be predetermined values. The first, second and/or third pressure threshold values may be predetermined by determining pressure value data for the vehicle, i.e. tire pressure and/or air suspension pressure, pertaining to the connecting of the trailer to the vehicle. Pressure data values pertaining to the connected state and the unconnected state may be determined.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure. For example, the numbering of the first, second and/or third pressure threshold value may be interchangeable.

Optionally in some examples, including in at least one preferred example, the vehicle further comprises an engine, and wherein the first point in time, T1, occurs, as set by the control unit, when the engine ignition is on, and wherein the second point in time, T2, occurs, as set by the control unit, after the engine ignition has been turned off and thereafter turned on again such that a connection of the trailer to the vehicle occurring in between the first and second points in time, T1, T2 is detectable by the control unit.

A technical benefit may include that a more reliable method for determining the connection status is provided. Erroneous or spurious signals pertaining to changes in pressure values pertaining to the tire and/or air suspension pressure may be discriminated. Data pertaining to the operation of the vehicle may moreover be utilized in the determining of connection status. A more exact determining of if the trailer is connected to the vehicle or not may be provided.

According to a second aspect of the disclosure, there is provided a system for determining a trailer connection status of a vehicle. The system comprising: an air suspension pressure sensor configured to determine air pressure in an air suspension system of the vehicle; a tire pressure sensor configured to determine tire pressure inside a tire of the vehicle; a control unit communicatively connected with the air suspension pressure sensor and with the tire pressure sensor, wherein the control unit is configured to receive data pertaining to air suspension pressure and to tire pressure from the air suspension pressure sensor and the tire pressure sensor, respectively, and wherein the control unit is further configured to: at a first point in time, T1, receive from the air suspension pressure sensor a first air suspension pressure value, PAS1, and receive from the tire pressure sensor a corresponding first tire pressure value, PT1; and at a second point in time, T2, receive from the air suspension pressure sensor a second air suspension pressure value, PAS2, and receive from the tire pressure sensor a corresponding second tire pressure value, PT2, the second point in time, T2, being after the first point in time, T1, and; to determine an air suspension pressure difference value, ΔPAS, by comparing the first and the second air suspension pressure values, PAS1, PAS2, and a tire pressure difference value, ΔPT, by comparing the first and the second tire pressure values PT1, PT2, whereby the trailer connection status is determined based on the determined air suspension pressure difference value, ΔPAS, and tire pressure difference value, ΔPT, the trailer connection status being indicative of if a trailer is mechanically connected to the vehicle. The second aspect of the disclosure may seek to provide a more reliable system for determining the connection status of a vehicle and a trailer. Problems associated with knowing if the trailer is connected or not to the vehicle may thereby be mitigated. A technical benefit may include that a more consistent determining the connection status of the vehicle and the trailer is provided. A more cost-effective system is moreover provided that is less labor intensive to implement. Effects and features of the second aspects are to a large extent analogous to those described above in connection with the first aspect. Embodiments mentioned in relation to the first aspect are largely compatible with the second aspect.

Optionally in some examples, including in at least one preferred example, vehicle comprises a trailer hitch arrangement arranged to connect with a coupler of the trailer such that the vehicle and the trailer are mechanically connected. A technical benefit may include that a robust arrangement is provided that allows the vehicle to mechanically connect to and to tow the trailer. Put differently, the trailer hitch arrangement provides one or more components that enable the vehicle to securely connect to the trailer.

Optionally in some examples, including in at least one preferred example, the air suspension pressure sensor forms part of an air suspension system of the vehicle. An efficient system for regulating and/or determining the air suspension pressure is thereby provided.

The wording air suspension system should be construed as system for vehicle suspension. The air suspension system may be powered by an electric or engine-driven air pump or a compressor. By way of example, the air pump and/or compressor pumps the air into one or more flexible bellows. The air pressure inside these bellows, which may be referred to as air springs or air bags, may be adjusted in shape and/or extent to change the vehicle stances and/or load level.

The air suspension system may further comprise a reservoir or tank that stores compressed air. This may allow for quicker adjustments of the suspension since there's a ready supply of compressed air.

The air suspension system may comprise an air suspension control module. The air suspension control module may be configured to manage adjust and/or control suspension settings of the air suspension system. The air suspension control module may be communicatively connected with the control unit. The air suspension control unit may be configured to send data pertaining to the air suspension pressure to the control unit. Alternatively, the air suspension control unit may form part of the control unit.

Optionally in some examples, including in at least one preferred example, the trailer connection status is in a connected state if the coupler of the trailer is attached to the trailer hitch arrangement or in an unconnected state if the coupler of the trailer is detached from the trailer hitch arrangement. A technical benefit may include that a well-defined status of the trailer connection is provided. A safer operation of the vehicle may thereby be provided.

Optionally in some examples, including in at least one preferred example, the control unit is configured to determine the trailer connection status to be in the connected state if the air suspension pressure difference value ΔPAS is larger than a first threshold value and the tire pressure difference value ΔPT is larger than a second threshold value. A technical benefit may include that a more reliable determining of the trailer connection status is provide. Pressure value data pertaining to true changes in pressure values as a result of the mechanical coupling/uncoupling of the trailer to the vehicle may thereby be distinguished from spurious sensor data pertaining to other pressure changes in the tire pressure and/or air suspension pressure.

The pressure difference values may, respectively, be defined by ΔPAS = PAS2-PAS1 and ΔPT= PT2-PT1. The pressure difference values may be normalised. The pressure difference values may be calculated using absolute values.

Optionally in some examples, including in at least one preferred example, the control unit is configured to determine if the trailer connection status is in the connected state if the sum of the air suspension difference value ΔPAS and the tire pressure difference value ΔPT is larger than a third threshold value. A technical benefit may include that a more reliable method is provided. Pressure data values pertaining to known changes in pressures for the tires and the air suspension may thereby be used.

The first, second and/or third pressure threshold values may be predetermined values. The first, second and/or third pressure threshold values may be predetermined by determining pressure value data for the vehicle, i.e. tire pressure and/or air suspension pressure, pertaining to the connecting of the trailer to the vehicle.

Pressure data values pertaining to the connected state and the unconnected state may be determined. A data base of pressure difference values may be provided. The data base may comprise pressure values and/or pressure threshold values for one or more types of vehicle - trailer combinations. Data pertaining to the specific type of vehicle and/or trailer may thereby be used for the determining of trailer connection status. The data base may be used to determine the first, second and/or third pressure threshold values. The control unit may use the data base. The data base may be stored in a memory. The memory may be accessed by the control unit.

Optionally in some examples, including in at least one preferred example, the vehicle further comprises an engine, and wherein the first point in time, T1, occurs, as set by the control unit, when the engine ignition is on, and wherein the second point in time, T2, occurs, as set by the control unit, after the engine ignition has been turned off and thereafter turned on again such that a mechanical connection of the trailer to the vehicle occurring in between the first and second points in time, T1, T2 is detectable by the control unit. A technical benefit may include that a more reliable system for determining the connection status is provided. Erroneous or spurious signals pertaining to changes in pressure may be discriminated. A more exact determining of if the trailer is connected to the vehicle or not may be provided.

Optionally in some examples, including in at least one preferred example, the mechanical connection of the trailer to the vehicle is detected by a change in the trailer connection status as determined based on the air suspension and tire pressure difference values ΔPAS, ΔPT, the change being conditioned to occur within a time period being smaller than a threshold time period. A technical benefit may include that a more reliable system is provided. By detecting a change in the connection status that occurs within a set time period a more accurate determining of the connection status may be obtained. Put differently, changes in pressure values for the tire and/or the air suspension pressure that may occur outside the set threshold time period may be discriminated. By way of example, is system may discriminate a change in the trailer connection status from a slow change of the pressure difference such as when the vehicle is loaded with goods.

The trailer connection status being in a connected or an unconnected status. The time period set may be the expected time period needed to connect, e.g. hook or unhook the trailer to the vehicle.

The data base may comprise data pertaining to the time period and/or threshold time period needed to connect the trailer to the vehicle.

Optionally in some examples, including in at least one preferred example, the system is configured to repeatedly determine air suspension pressure values, PAS and tire pressure values, PT, and the mechanical connection of the trailer to the vehicle is detected by a change in the trailer connection status as determined based on air suspension and tire pressure difference values ΔPAS, ΔPT, the change being conditioned to occur if the air suspension and/or the tire pressure difference values ΔPAS, ΔPT are constant over a time period being larger than a threshold time period. A technical benefit may include that a more reliable system is provided. By way of example, the system may thereby discriminate a change in trailer connection status from a fast change in the pressure difference of the air suspension and/or the tire pressure such as when the vehicle is, for example subjected to a sudden impact or when the vehicle is driving over a bump or hole in the road. The wording repeatedly determining may be understood as determining a plurality of times.

The trailer connection status may be in a connected or an unconnected status. The threshold time period may be predetermined. The threshold time period may be set by timing the time duration needed to mechanically connect and/or disconnect the trailer to the vehicle.

According to a third aspect there is provided a vehicle comprising the system of the second aspect. Effects and features of the third aspects are to a large extent analogous to those described above in connection with the first and second aspects. Embodiments mentioned in relation to the first and second aspects are largely compatible with the third aspect. The vehicle may be a heavy-duty vehicle.

The control unit may be configured to output a trailer connection status message indicative of if the connected or unconnected state to an information system of the vehicle or to a user equipment associated with a driver of the vehicle.

The system may be configured to repeatedly determine air suspension pressure values, PAS and tire pressure values, PT, and the mechanical connection of the trailer to the vehicle may be detected by a change in the trailer connection status as determined based on air suspension and tire pressure difference values ΔPAS, ΔPT, the change being conditioned to occur within a time period being larger than a filtering threshold time period. The filtering threshold time may pertain to a time interval set such that spurious pressure differences induced be sudden shocks and/or vibrations induced to the vehicle may be discriminated. The filtering threshold time period may be set by determining the time needed to connect or disconnect the trailer to the vehicle.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary illustration of a vehicle with a connected trailer, the vehicle comprising a system for determining a trailer connection status of the vehicle according to an example.
**FIG. 2** is an exemplary illustration of a vehicle with an unconnected trailer, the vehicle comprising a system for determining a trailer connection status of the vehicle according to an example.
**FIG. 3** is an exemplary flow chart illustrating a method for determining a trailer connection status of a vehicle according to an example.
**FIG. 4** is an exemplary flow chart illustrating the determining of a trailer connection status of a vehicle according to an example.
**FIG. 5a and FIG. 5b** are respectively exemplary illustrations of a vehicle with a connected and unconnected trailer according to an example, the vehicle comprising a system for determining a trailer connection status of the vehicle.

### DETAILED DESCRIPTION

The detailed description set forth below provides information and examples of the disclosed technology with sufficient detail to enable those skilled in the art to practice the disclosure.

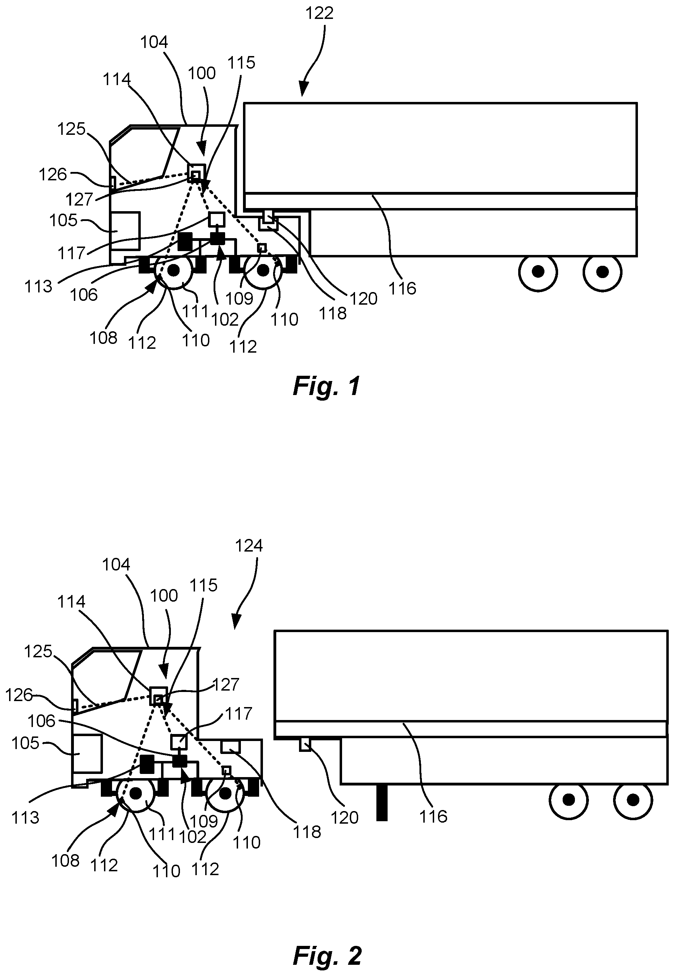

**FIG. 1** is an exemplary illustration of a vehicle 104 with a connected trailer 116, the vehicle 104 comprising a system 100 for determining a trailer connection status of the vehicle 104 according to an example. The trailer 116 is connected to the vehicle 104. **FIG. 2** is an exemplary illustration of the vehicle 104 of **FIG. 1** but with the trailer 116 unconnected to the vehicle 104. The wording unconnected is here to be understood as the vehicle and trailer being disconnected.

With reference to **FIG. 1** and **FIG. 2****,** the determining a trailer connection status of the vehicle 104 will be described. In more detail, **FIG. 1** illustrates a system 100 for determining a trailer connection status of a vehicle 104. The system 100 comprising: an air suspension pressure sensor 106 configured to determine air pressure in an air suspension system 102 of the vehicle 104.

The air suspension pressure sensor 106 may form part of an air suspension system 102. The air suspension system 102 may further comprise a reservoir or tank 113 that stores compressed air. This may allow for quicker adjustments of the air suspension since there is a ready supply of compressed air for the air suspension system 102. The air suspension system 102 may comprise an air suspension control module 117. The air suspension control module 117 may be configured to manage, adjust and/or control suspension settings of the air suspension system 102. The air suspension control module 117 may be communicatively connected with the control unit 114. The air suspension control unit 117 may be configured to send data pertaining to the air suspension pressure to the control unit 114. Alternatively, the control unit 114 may comprise the hardware and/or functionality of the air suspension control module 117.

The wording air suspension system should thus be construed as system for vehicle suspension. The system may be powered by an electric or engine-driven air pump or a compressor.

The air suspension pressure may pertain to a bellow pressure. By way of example, the air pump and/or compressor pumps the air into one or more flexible bellows. The air pressure inside these bellows, which may be referred to as air springs or air bags, may be adjusted in shape and/or extent to change the vehicle stances and/or load level. The bellows may be made of a textile-reinforced rubber. The air suspension system 102 may further comprise air lines, e.g. tubes or hoses, arranged to deliver compressed air from the compressor to the air bags.

The control unit 114 may form part of or be an electronic control unit, ECU. The EUC is configured to process data from the air suspension pressure sensor. The EUC may further be configured to control the compressor and pressure valves configured to adjust the suspension of the vehicle 104.

The air suspension system 102 may comprise a plurality of air suspension pressure sensors 106.

By way of example, the system 100 is exemplified in **FIGs. 1** and **2** to comprise a plurality of tires pressure sensors 110. Thus, one or more tire pressure sensors 110 may form part of a tire pressure sensor system 108 comprising a plurality of tire pressure sensors 110. The tire pressure sensor system 108 may be referred to as a tire pressure monitoring system, TPMS.

The system 100 may alternatively comprise one tire pressure sensor 110. The tire pressure sensor 110 is configured to determine tire pressure inside a tire 112 of the vehicle 104.

The tire pressure sensor system 108 may be configured to monitor the air pressure of one or more tires 112 of the vehicle 104 and may provide real-time data pertaining to the air pressures inside the one or more tires 112. The tire pressure sensor 110 may be a valve stem-mounted sensor. The valve stem-mounted sensor may be attached to the valve stem of a tire. The tire pressure sensor 110 may comprise a temperature sensor, and/or a transmitter. The tire 112 is arranged on a wheel 111 of the vehicle 104.

Alternatively, the tire pressure sensor 110 may be mounted inside a tire 112, e.g. attached to the wheel rim. The tire pressure sensor 110 may be configured to monitor pressure and temperature. The tire pressure sensor 110 may be configured to transmit data pertaining to the sensed pressure and/or temperature.

The system 100 may further comprise a control unit 114 communicatively connected 115 with the air suspension pressure sensor 106 and with the tire pressure sensor 110, wherein the control unit 114 is configured to receive data pertaining to air suspension pressure and to tire pressure from the air suspension pressure sensor 106 and the tire pressure sensor 110, respectively.

The control unit 114 may be integrated with the vehicle's Electronic Control Unit, ECU. The control unit 114 may be configured to receive the data transmitted by the one or more tire pressure sensors 110 and the one or more air suspension pressure sensors 106 and processes the data received.

The tire pressure sensor system 108 may comprise an antenna configured to enhance the communication between the one or more tire pressure sensors 110 and the control unit 114.

The tire pressure sensor system 108 may comprise a control module 109 configured to manage sensor data pertaining to the tire pressure sensors 110 and to interpret the sensor data. The control module 109 may be configured to communicate with the vehicle's 104 operational systems such as the control unit 114 and/or an instrument cluster of the vehicle 104.

The control unit 114 may form part of the tire pressure sensor system 108. The tire pressure sensor system may alternatively comprise a receiver which receives the data transmitted by the tire pressure sensor or sensors and processes it. The receiver may be integrated or communicatively connected to the control unit 114.

The tire pressor sensor 110 and/or tire pressure sensor system 108 may comprise a power source such as a battery for powering the one more sensors 110 and for transmitting sensor data. The tire pressure sensor system 108 may further comprise wiring and connectors arranged to provide electrical connections necessary to link at least the tire pressures sensors and the control unit 114. The transmitting of sensor data may be by wired and/or wire-less communication.

As illustrated in **FIGs. 1** and **2****,** the vehicle 104 comprises: a trailer hitch arrangement 118 arranged to connect with a coupler 120 of a trailer 116 such that the vehicle 104 and the trailer 116 are mechanically connected. The trailer hitch arrangement 118 may comprise a Palm coupling.

In more detail, the trailer connection status is in a connected state 122 if the coupler 120 of the trailer 116 is mechanically connected to the trailer hitch arrangement 118 or in an unconnected state 124 if the coupler 120 of the trailer 116 is detached from the trailer hitch arrangement 118. The connected state 122 and the unconnected state 124 are illustrated in **FIG. 1** and **FIG. 2****,** respectively. The trailer 116 and the vehicle 104 are mechanically connected in the connected state 122. The trailer 116 and the vehicle 104 are mechanically disconnected in the unconnected state 124.

The control unit 114 may be configured to output a trailer connection status message 125 indicative of if the connected 122 or unconnected state 124 to an information system 126 of the vehicle 104 or to a user equipment (not shown) associated with a driver of the vehicle 104. Put differently, the trailer connection status may comprise an indication of if the trailer 116 and the vehicle 104 are connected.

The state of the trailer connection status may be based on sensor data pertaining to the air suspension pressure difference value and the tire pressure difference value as will be discussed next.

The control unit 114 may be configured to: at a first point in time, T1, receive from the air suspension pressure sensor 106 a first air suspension pressure value, PAS1, and receive from the tire pressure sensor 110 a corresponding first tire pressure value, PT1.

The control unit 114 may further be configured to at a second point in time, T2, receive from the air suspension pressure sensor 106 a second air suspension pressure value, PAS2, and receive from the tire pressure sensor 110 a corresponding second tire pressure value, PT2. The second point in time, T2, is after the first point in time, T1.

The control unit 114 may also be configured to determine an air suspension pressure difference value, ΔPAS, by comparing the first and the second air suspension pressure values, PAS1, PAS2, and a tire pressure difference value, ΔPT, by comparing the first and the second tire pressure values PT1, PT2, whereby the trailer connection status is determined based on the determined air suspension pressure difference value, ΔPAS, and tire pressure difference value, ΔPT, the trailer connection status being indicative of if the trailer 116 is mechanically connected to the vehicle 104.

In more detail, the trailer connection status may be defined as being in a connected state 122 if the coupler 120 of the trailer 116 is attached to the trailer hitch arrangement 118. Alternatively, the trailer connection status may be defined as being in an unconnected state 124 if the coupler 120 of the trailer 116 is detached from the trailer hitch arrangement 118.

As also described above, the control unit 114 is configured to determine the trailer connection status to be in the connected state 122 if the air suspension pressure difference value ΔPAS is larger than a first threshold value and the tire pressure difference value ΔPT is larger than a second threshold value.

The control unit 114 may be configured to determine if the trailer connection status is in the connected state 122 if the sum of the air suspension difference value ΔPAS and the tire pressure difference value ΔPT is larger than a third threshold value.

The vehicle 104 may further comprise an engine 105, see **FIGs. 1** or **2****,** and wherein the first point in time, T1, occurs, as set by the control unit 114, when the engine ignition is on, and wherein the second point in time, T2, occurs, as set by the control unit 114, after the engine ignition has been turned off and thereafter turned on again such that a mechanical connection of the trailer 116 to the vehicle 104 occurring in between the first and second points in time, T1, T2 is detectable by the control unit 114.

The mechanical connection of the trailer 116 to the vehicle 104 may be detected by a change in the trailer connection status as determined based on the air suspension and tire pressure difference values ΔPAS, ΔPT, the change being conditioned to occur within a time period being smaller than a threshold time period. The control unit 114 may be configured to set a time difference, ΔT, between the first and the second point in time, T1, T2. The control unit 114 may be configured to determine the air suspension and tire pressure difference values ΔPAS, ΔPT for different time differences, ΔT. The time difference, ΔT, may be selected based on the threshold time period.

The system 100 may be configured to repeatedly determine air suspension pressure values, PAS and tire pressure values, PT, and the mechanical connection of the trailer 116 to the vehicle 104 is detected by a change in the trailer connection status as determined based on air suspension and tire pressure difference values ΔPAS, ΔPT, the change being conditioned to occur if the air suspension and/or the tire pressure difference values ΔPAS, ΔPT are constant over a time period being larger than a threshold time period.

An improved determining of tire pressure values for the vehicle may thereby be provided. The tire pressure sensor system may be configured to determine tire pressures value changes between different tires of the vehicle. By way of example, the tire pressure sensor system may compare tire pressure values between the front tires and the back tires of the vehicle. The tire pressure between pairs of tires, such as the back tires, may be averaged for increased precision.

The mechanical connection of the trailer 116 to the vehicle 104 may be detected by a change in the trailer connection status as determined based on the air suspension and tire pressure difference values ΔPAS, ΔPT, the change being conditioned to occur within a time period being larger than a filtering threshold time period.

The wording control unit may be understood as a unit configured to determine and/or monitor parameters pertaining to a state or a function of a device or a system of devices. The control unit 114 may further be configured to regulate and/or control a state and/or a function of a device or a system of devices. The control unit 114 may form part of a control system. The control system may comprise one or more control units. The wording control unit may be understood as a unit configured to handle control signals, such as processor control signals. The control unit may comprise circuitry for executing computer instructions. The control unit may further direct and/or determine input and output parameters, receive and/or send instructions to run computer code. The control unit may also be configured to monitor or direct other units and/or devices by control and timing signals.

The control unit 114 may comprise or be in communication to with a data communication module 127. The data communication module 127 may be understood as a device configured to exchange data between two or more devices or system of devices. The data communication module 127 may transmit the data by wireless communication. The data communication module may comprise a transceiver. The data communication module 127 may transmit data via wired communication and/or via wireless communication. The data communication module 127 may, for example, be configured to receive data pertaining to the air suspension pressure and/or tire pressure.

The tire pressure sensor 110 may according to some examples be referred to as a direct TPMS, i.e. the tire pressures sensor is installed inside a tire and to directly measure the tire's air pressure. The tire pressure sensor may according to some examples be referred to as an indirect TPMS, i.e. the tires pressure sensor may utilize sensors data from one or more wheel speed sensors of the vehicle to determine tire pressure changes based on differences in the rotational speed of an individual wheel.

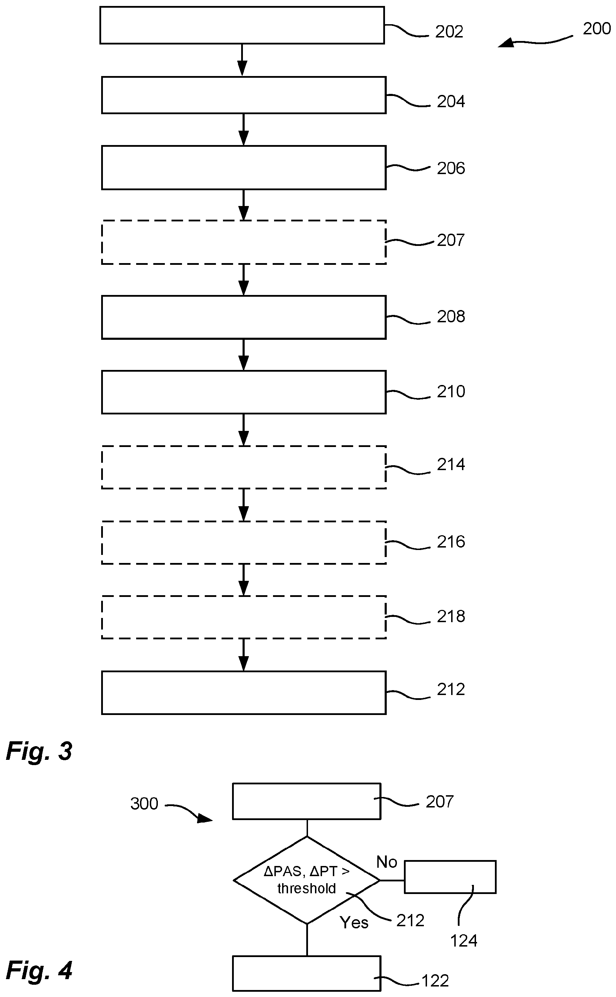

**FIG. 3** is, moreover, an exemplary flow chart illustrating a method for determining a trailer connection status of the vehicle.

In more detail, the method 200 for determining trailer connection status is illustrated, see also **FIGS. 1** and **2** for reference. The method 200 for determining a trailer connection status for a vehicle, the vehicle 104 comprises: a trailer hitch arrangement 118 arranged to connect with a coupler 120 of a trailer 116 such that the vehicle 104 and the trailer 116 are mechanically connected; an air suspension pressure sensor 106 configured to determine air pressure in an air suspension system 102 of the vehicle 104; a tire pressure sensor 110 configured to determine tire pressure inside a tire 112 of the vehicle 104.

A control unit 114 may further be communicatively connected 115 with the air suspension pressure sensor 106 and with the tire pressure sensor 110. The method 200 may further comprise: determining 202, at a first point in time, T1, by the air suspension pressure sensor 106 a first air suspension pressure value, PAS1, and, by the tire pressure sensor 110 a corresponding first tire pressure value, PT1; determining 204, at a second point in time, T2, by the air suspension pressure sensor 106 a second air suspension pressure value, PAS2, and, by the tire pressure sensor 110 a corresponding second tire pressure value, PT2, the second point in time, T2, being after the first point in time, T1; receiving 206, by the control unit 114, the first and the second air suspension pressure values, PAS1, PAS2 and the first and the second tire pressure values PT1, PT2, to determine 208 an air suspension pressure difference value, ΔPAS, and to determine 210 a tire pressure difference value, ΔPT; and determining 212, by the control unit 114, the trailer connection status based on the determined air suspension and tire pressure difference values, ΔPAS, ΔPT, the trailer connection status being indicative of if the trailer 116 is mechanically connected to the vehicle 104.

To this end, the trailer connection status is in a connected state 122 if the coupler 120 of the trailer 116 is mechanically connected to the trailer hitch arrangement 118 or in an unconnected state 124 if the coupler 120 of the trailer 116 is detached from the trailer hitch arrangement 118.

The determined trailer connection status may be in the connected state 122 if the air suspension pressure difference value, ΔPAS, is larger than a first threshold value and the tire pressure difference value, ΔPT, is larger than a second threshold value.

The trailer connection status may be in the connected state 122 if the sum of the air suspension pressure difference value, ΔPAS, and the tire pressure difference value, ΔPT, is larger than a third threshold value. An example flow chart 300 is illustrated in **FIG. 4** for clarity. Put differently, **FIG. 4** illustrates how the trailer connection status may be determined 212 based on the sum of the air suspension pressure difference value, ΔPAS, and the tire pressure difference value, ΔPT, i.e. the trailer connection status is determined to be in the connected state 122 if the sum is larger than the third threshold value and to be in the unconnected state 124 if the sum is smaller or equal to the third threshold. The flow chart 300 of **FIG. 4** further illustrates that the method 200 may comprise performing 207 a preconditional check to ensure that the air suspension pressure values and the tire pressure values are within predetermined pressure ranges. The control unit 114 may be configured to perform the preconditional check.

The air suspension pressure difference value, ΔPAS, may be defined as ΔPAS = PAS2-PAS1, where PAS2 is the second air suspension pressure value, and PAS1 is the first air suspension pressure value. Correspondingly, the tire pressure difference value, ΔPT, may be defined by ΔPT= PT2-PT1, where PT2 is the second tire pressure value and PT1 is the first tire pressure value.

As described above, the vehicle 104 may further comprise an engine 105, and wherein the first point in time, T1, occurs, as set by the control unit 114, when the engine ignition is on, and wherein the second point in time, T2, occurs, as set by the control unit 114, after the engine ignition has been turned off and thereafter turned on again such that a connection of the trailer 116 to the vehicle 104 occurring in between the first and second points in time, T1, T2 is detectable by the control unit 114.

The method 200 may further comprise the mechanical connection of the trailer 116 to the vehicle 104 being determined 212 by the control unit 114, detecting 214 a change in the trailer connection status as determined based on the air suspension and tire pressure difference values ΔPAS, ΔPT, the change being conditioned to occur within a time period being smaller than a threshold time period.

The method 200 may be configured to repeatedly determine air suspension pressure values, PAS and tire pressure values, PT. The method 200 may further comprise the mechanical connection of the trailer 116 to the vehicle 104 being determined 212 by the control unit 114, detecting 216 a change in the trailer connection status as determined based on the air suspension and tire pressure difference values ΔPAS, ΔPT, the change being conditioned to occur if the air suspension and/or the tire pressure difference values ΔPAS, ΔPT are constant over a time period being larger than a threshold time period .

The method 200 may further comprise the mechanical connection of the trailer 116 to the vehicle 104 being determined 212 by the control unit 114, detecting 218 a change in the trailer connection status as determined based on the air suspension and tire pressure difference values ΔPAS, ΔPT, the change being conditioned to occur within a time period being larger than a filtering threshold time period.

The determining 212 of the method 200 may thereby comprise one or more of the above detecting actions 214, 216, and 218.

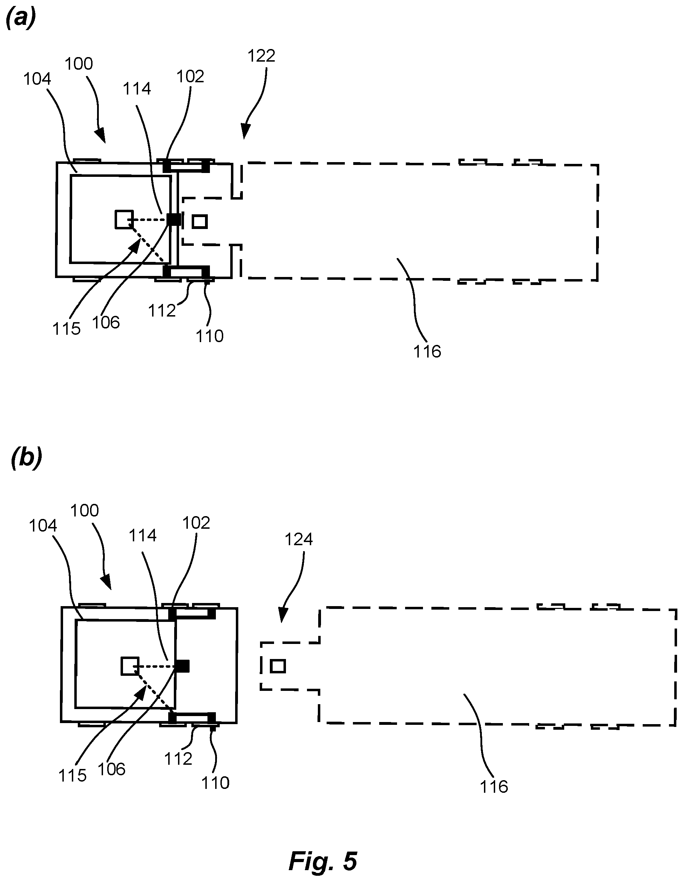

**FIG. 5a and FIG. 5b** are respectively exemplary illustrations of a vehicle 104 with a connected and unconnected trailer 116 according to an example. The vehicle 104 comprising a system 100 for determining a trailer connection status of the vehicle 104.

In more detail **FIG. 5a** and **5b** show a system 100 for determining a trailer connection status of a vehicle 104 from a top view perspective. The system 100 comprises: an air suspension pressure sensor 106 configured to determine air pressure in an air suspension system 102 of the vehicle 104; a tire pressure sensor 110 configured to determine tire pressure inside a tire 112 of the vehicle 104; a control unit 114 communicatively connected 115 with the air suspension pressure sensor 106 and with the tire pressure sensor 110, wherein the control unit 114 is configured to receive data pertaining to air suspension pressure and to tire pressure from the air suspension pressure sensor 106 and the tire pressure sensor 110, respectively, and wherein the control unit 114 is further configured to: at a first point in time, T1, receive from the air suspension pressure sensor 106 a first air suspension pressure value, PAS1, and receive from the tire pressure sensor 110 a corresponding first tire pressure value, PT1; and at a second point in time, T2, receive from the air suspension pressure sensor 106 a second air suspension pressure value, PAS2, and receive from the tire pressure sensor 110 a corresponding second tire pressure value, PT2, the second point in time, T2, being after the first point in time, T1, and; to determine an air suspension pressure difference value, ΔPAS, by comparing the first and the second air suspension pressure values, PAS1, PAS2, and a tire pressure difference value, ΔPT, by comparing the first and the second tire pressure values PT1, PT2, whereby the trailer connection status is determined based on the determined air suspension pressure difference value, ΔPAS, and tire pressure difference value, ΔPT, the trailer connection status being indicative of if a trailer 116 is mechanically connected to the vehicle 104.

Example 1: A method for determining a trailer connection status for a vehicle, the vehicle 104 comprising:
a trailer hitch arrangement 118 arranged to connect with a coupler 120 of a trailer 116 such that the vehicle 104 and the trailer 116 are mechanically connected;
an air suspension pressure sensor 106 configured to determine air pressure in an air suspension system 102 of the vehicle 104;
a tire pressure sensor 110 configured to determine tire pressure inside a tire 112 of the vehicle 104, and
a control unit 114 communicatively connected 115 with the air suspension pressure sensor 106 and with the tire pressure sensor 110, wherein the method 200 comprises:
   determining 202, at a first point in time, T1, by the air suspension pressure sensor 106 a first air suspension pressure value, PAS1, and, by the tire pressure sensor 110 a corresponding first tire pressure value, PT1;
   determining 204, at a second point in time, T2, by the air suspension pressure sensor 106 a second air suspension pressure value, PAS2, and, by the tire pressure sensor 110 a corresponding second tire pressure value, PT2, the second point in time, T2, being after the first point in time, T1;
   receiving 206, by the control unit 114, the first and the second air suspension pressure values, PAS1, PAS2 and the first and the second tire pressure values PT1, PT2, to determine 208 an air suspension pressure difference value, ΔPAS, and to determine 210 a tire pressure difference value, ΔPT; and
   determining 212, by the control unit 114, the trailer connection status based on the determined air suspension and tire pressure difference values, ΔPAS, ΔPT, the trailer connection status being indicative of if the trailer 116 is mechanically connected to the vehicle 104.

Example 2: The method of Example 1, wherein the trailer connection status is in a connected state 122 if the coupler 120 of the trailer 116 is mechanically connected to the trailer hitch arrangement 118 or in an unconnected state 124 if the coupler 120 of the trailer 116 is detached from the trailer hitch arrangement 118.

Example 3: The method according to Example 2, wherein the determined trailer connection status is in the connected state 122 if the air suspension pressure difference value, ΔPAS, is larger than a first threshold value and the tire pressure difference value, ΔPT, is larger than a second threshold value.

Example 4: The method according to Example 2 or 3, wherein the trailer connection status is in the connected state 122 if the sum of the air suspension pressure difference value, ΔPAS, and the tire pressure difference value, ΔPT, is larger than a third threshold value.

Example 5: The method according to any one of the Examples 1 to 4, wherein the vehicle 104 further comprises an engine 105, and wherein the first point in time, T1, occurs, as set by the control unit 114, when the engine ignition is on, and wherein the second point in time, T2, occurs, as set by the control unit 114, after the engine ignition has been turned off and thereafter turned on again such that a connection of the trailer 116 to the vehicle 104 occurring in between the first and second points in time, T1, T2 is detectable by the control unit 114.

Example 6: A system for determining a trailer connection status of a vehicle, the system 100 comprising:
an air suspension pressure sensor 106 configured to determine air pressure in an air suspension system 102 of the vehicle 104;
a tire pressure sensor 110 configured to determine tire pressure inside a tire 112 of the vehicle 104;
a control unit 114 communicatively connected 115 with the air suspension pressure sensor 106 and with the tire pressure sensor 110, wherein the control unit 114 is configured to receive data pertaining to air suspension pressure and to tire pressure from the air suspension pressure sensor 106 and the tire pressure sensor 110, respectively, and wherein the control unit 114 is further configured to:
   at a first point in time, T1, receive from the air suspension pressure sensor 106 a first air suspension pressure value, PAS1, and receive from the tire pressure sensor 110 a corresponding first tire pressure value, PT1; and
   at a second point in time, T2, receive from the air suspension pressure sensor 106 a second air suspension pressure value, PAS2, and receive from the tire pressure sensor 110 a corresponding second tire pressure value, PT2, the second point in time, T2, being after the first point in time, T1, and;
   to determine an air suspension pressure difference value, ΔPAS, by comparing the first and the second air suspension pressure values, PAS1, PAS2, and a tire pressure difference value, ΔPT, by comparing the first and the second tire pressure values PT1, PT2, whereby the trailer connection status is determined based on the determined air suspension pressure difference value, ΔPAS, and tire pressure difference value, ΔPT, the trailer connection status being indicative of if a trailer 116 is mechanically connected to the vehicle 104.

Example 7: The system of Example 6, wherein the vehicle 104 comprises a trailer hitch arrangement 118 arranged to connect with a coupler 120 of the trailer 116 such that the vehicle 104 and the trailer 116 are mechanically connected.

Example 8: The system according to Example 6 or 7, wherein the air suspension pressure sensor 106 forms part of an air suspension system 102 of the vehicle 104.

Example 9: The system according to any one of Examples 6 to 8, wherein the trailer connection status is in a connected state 122 if the coupler 120 of the trailer 116 is attached to the trailer hitch arrangement 118 or in an unconnected state 124 if the coupler 120 of the trailer 116 is detached from the trailer hitch arrangement 118.

Example 10: The system according to Example 9, wherein the control unit 114 is configured to determine the trailer connection status to be in the connected state 122 if the air suspension pressure difference value ΔPAS is larger than a first threshold value and the tire pressure difference value ΔPT is larger than a second threshold value.

Example 11: The system according to Example 9 or 10, wherein the control unit 114 is configured to determine if the trailer connection status is in the connected state 122 if the sum of the air suspension difference value ΔPAS and the tire pressure difference value ΔPT is larger than a third threshold value.

Example 12: The system according to any one of the Examples 6 to 11, wherein the vehicle 104 further comprises an engine 105, and wherein the first point in time, T1, occurs, as set by the control unit 114, when the engine ignition is on, and wherein the second point in time, T2, occurs, as set by the control unit 114, after the engine ignition has been turned off and thereafter turned on again such that a mechanical connection of the trailer 116 to the vehicle 104 occurring in between the first and second points in time, T1, T2 is detectable by the control unit 114.

Example 13: The system according to Example 12, wherein the mechanical connection of the trailer 116 to the vehicle 104 is detected by a change in the trailer connection status as determined based on the air suspension and tire pressure difference values ΔPAS, ΔPT, the change being conditioned to occur within a time period being smaller than a threshold time period.

Example 14: The system according to Examples 12 or 13, wherein the system 100 is configured to repeatedly determine air suspension pressure values, PAS and tire pressure values, PT, and wherein the mechanical connection of the trailer 116 to the vehicle 104 is detected by a change in the trailer connection status as determined based on air suspension and tire pressure difference values ΔPAS, ΔPT, the change being conditioned to occur if the air suspension and/or the tire pressure difference values ΔPAS, ΔPT are constant over a time period being larger than a threshold time period.

Example 15: A vehicle comprising the system of any one of Examples 6 to 14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present invention as defined by the appended claims. In the drawings and specification, there have been disclosed aspects for purposes of illustration only and not for purposes of limitation, the scope of the disclosure being set forth in the following claims.

## Claims

1. A method for determining a trailer connection status for a vehicle, the vehicle (104) comprising:
a trailer hitch arrangement (118) arranged to connect with a coupler (120) of a trailer (116) such that the vehicle (104) and the trailer (116) are mechanically connected;
an air suspension pressure sensor (106) configured to determine air pressure in an air suspension system (102) of the vehicle (104);
a tire pressure sensor (110) configured to determine tire pressure inside a tire (112) of the vehicle (104), and
a control unit (114) communicatively connected (115) with the air suspension pressure sensor (106) and with the tire pressure sensor (110), **characterized in that** the method (200) comprises:
determining (202), at a first point in time, T1, by the air suspension pressure sensor (106) a first air suspension pressure value, PAS1, and, by the tire pressure sensor (110) a corresponding first tire pressure value, PT1;
determining (204), at a second point in time, T2, by the air suspension pressure sensor (106) a second air suspension pressure value, PAS2, and, by the tire pressure sensor (110) a corresponding second tire pressure value, PT2, the second point in time, T2, being after the first point in time, T1;
receiving (206), by the control unit (114), the first and the second air suspension pressure values, PAS1, PAS2 and the first and the second tire pressure values PT1, PT2, to determine (208) an air suspension pressure difference value, ΔPAS, and to determine (210) a tire pressure difference value, ΔPT; and
determining (212), by the control unit (114), the trailer connection status based on the determined air suspension and tire pressure difference values, ΔPAS, ΔPT, the trailer connection status being indicative of if the trailer (116) is mechanically connected to the vehicle (104).

2. The method according to claim 1, wherein the trailer connection status is in a connected state (122) if the coupler (120) of the trailer (116) is mechanically connected to the trailer hitch arrangement (118) or in an unconnected state (124) if the coupler (120) of the trailer (116) is detached from the trailer hitch arrangement (118).

3. The method according to claim 2, wherein the determined trailer connection status is in the connected state (122) if the air suspension pressure difference value, ΔPAS, is larger than a first threshold value and the tire pressure difference value, ΔPT, is larger than a second threshold value.

4. The method according to claim 2 or 3, wherein the trailer connection status is in the connected state (122) if the sum of the air suspension pressure difference value, ΔPAS, and the tire pressure difference value, ΔPT, is larger than a third threshold value.

5. The method according to any one of the claims 1 to 4, wherein the vehicle (104) further comprises an engine (105), and wherein the first point in time, T1, occurs, as set by the control unit (114), when the engine ignition is on, and wherein the second point in time, T2, occurs, as set by the control unit (114), after the engine ignition has been turned off and thereafter turned on again such that a connection of the trailer (116) to the vehicle (104) occurring in between the first and second points in time, T1, T2 is detectable by the control unit (114).

6. A system for determining a trailer connection status of a vehicle, the system (100) comprising:
an air suspension pressure sensor (106) configured to determine air pressure in an air suspension system (102) of the vehicle (104);
a tire pressure sensor (110) configured to determine tire pressure inside a tire (112) of the vehicle (104);
a control unit (114) communicatively connected (115) with the air suspension pressure sensor (106) and with the tire pressure sensor (110), wherein the control unit (114) is configured to receive data pertaining to air suspension pressure and to tire pressure from the air suspension pressure sensor (106) and the tire pressure sensor (110), respectively, and **characterized in that** the control unit (114) is further configured to:
at a first point in time, T1, receive from the air suspension pressure sensor (106) a first air suspension pressure value, PAS1, and receive from the tire pressure sensor (110) a corresponding first tire pressure value, PT1; and
at a second point in time, T2, receive from the air suspension pressure sensor (106) a second air suspension pressure value, PAS2, and receive from the tire pressure sensor (110) a corresponding second tire pressure value, PT2, the second point in time, T2, being after the first point in time, T1, and;
to determine an air suspension pressure difference value, ΔPAS, by comparing the first and the second air suspension pressure values, PAS1, PAS2, and a tire pressure difference value, ΔPT, by comparing the first and the second tire pressure values PT1, PT2, whereby the trailer connection status is determined based on the determined air suspension pressure difference value, ΔPAS, and tire pressure difference value, ΔPT, the trailer connection status being indicative of if a trailer (116) is mechanically connected to the vehicle (104).

7. The system of claim 6, wherein the vehicle (104) comprises a trailer hitch arrangement (118) arranged to connect with a coupler (120) of the trailer (116) such that the vehicle (104) and the trailer (116) are mechanically connected.

8. The system according to claim 6 or 7, wherein the air suspension pressure sensor (106) forms part of an air suspension system (102) of the vehicle (104) .

9. The system according to any one of claims 6 to 8, wherein the trailer connection status is in a connected state (122) if the coupler (120) of the trailer (116) is attached to the trailer hitch arrangement (118) or in an unconnected state (124) if the coupler (120) of the trailer (116) is detached from the trailer hitch arrangement (118).

10. The system according to claim 9, wherein the control unit (114) is configured to determine the trailer connection status to be in the connected state (122) if the air suspension pressure difference value ΔPAS is larger than a first threshold value and the tire pressure difference value ΔPT is larger than a second threshold value.

11. The system according to claim 9 or 10, wherein the control unit (114) is configured to determine if the trailer connection status is in the connected state (122) if the sum of the air suspension difference value ΔPAS and the tire pressure difference value ΔPT is larger than a third threshold value.

12. The system according to any one of the claims 6 to 11, wherein the vehicle (104) further comprises an engine (105), and wherein the first point in time, T1, occurs, as set by the control unit (114), when the engine ignition is on, and wherein the second point in time, T2, occurs, as set by the control unit (114), after the engine ignition has been turned off and thereafter turned on again such that a mechanical connection of the trailer (116) to the vehicle (104) occurring in between the first and second points in time, T1, T2 is detectable by the control unit (114).

13. The system according to claim 12, wherein the mechanical connection of the trailer (116) to the vehicle (104) is detected by a change in the trailer connection status as determined based on the air suspension and tire pressure difference values Δ PAS, ΔPT, the change being conditioned to occur within a time period being smaller than a threshold time period.

14. The system according to claim 12 or 13, wherein the system (100) is configured to repeatedly determine air suspension pressure values, PAS and tire pressure values, PT, and wherein the mechanical connection of the trailer (116) to the vehicle (104) is detected by a change in the trailer connection status as determined based on air suspension and tire pressure difference values ΔPAS, ΔPT, the change being conditioned to occur if the air suspension and/or the tire pressure difference values ΔPAS, ΔPT are constant over a time period being larger than a threshold time period.

15. A vehicle comprising the system of any one of claims 6 to 14.

## Patentansprüche

1. Verfahren zum Bestimmen eines Anhängerverbindungsstatus für ein Fahrzeug, wobei das Fahrzeug (104)Folgendes umfasst:
eine Anhängerkupplungsanordnung (118), die dazu angeordnet ist, sich mit einem Koppler (120) eines Anhängers (116) zu verbinden, sodass das Fahrzeug (104) und der Anhänger (116) mechanisch verbunden sind;
einen Luftfederungsdrucksensor (106), der dazu konfiguriert ist, Luftdruck in einem Luftfederungssystem (102) des Fahrzeugs (104) zu bestimmen;
einen Reifendrucksensor (110), der dazu konfiguriert ist, Reifendruck innerhalb eines Reifens (112) des Fahrzeugs (104) zu bestimmen; und
eine Steuereinheit (114), die kommunikativ mit dem Luftfederungsdrucksensor (106) und mit dem Reifendrucksensor (110) verbunden (115) ist, **dadurch gekennzeichnet, dass** das Verfahren (200) Folgendes umfasst:
Bestimmen (202), zu einem ersten Zeitpunkt, T1, durch den Luftfederungsdrucksensor (106), eines ersten Luftfederungsdruckwertes, PAS1, und, durch den Reifendrucksensor (110), eines entsprechenden ersten Reifendruckwertes, PT1;
Bestimmen (204), zu einem zweiten Zeitpunkt, T2, durch den Luftfederungsdrucksensor (106), eines zweiten Luftfederungsdruckwertes, PAS2, und, durch den Reifendrucksensor (110), eines entsprechenden zweiten Reifendruckwertes, PT2, wobei der zweite Zeitpunkt, T2, nach dem ersten Zeitpunkt, T1, ist;
Empfangen (206), durch die Steuereinheit (114), der ersten und der zweiten Luftfederungsdruckwerte, PAS1, PAS2, und der ersten und der zweiten Reifendruckwerte, PT1, PT2, um einen Luftfederungsdruckdifferenzwert, ΔPAS, zu bestimmen (208) und um einen Reifendruckdifferenzwert, ΔPT, zu bestimmen (210); und
Bestimmen (212), durch die Steuereinheit (114), des Anhängerverbindungsstatus basierend auf den bestimmen Luftfederungs- und Reifendruckdifferenzwerten, ΔPAS, ΔPT, wobei der Anhängerverbindungsstatus angibt, ob der Anhänger (116) mechanisch mit dem Fahrzeug (104) verbunden ist.

2. Verfahren nach Anspruch 1, wobei der Anhängerverbindungsstatus in einem verbundenen Zustand (122) ist, wenn der Koppler (120) des Anhängers (116) mechanisch mit der Anhängerkupplungsanordnung (118) verbunden ist, oder in einem nicht verbundenen Zustand (124), wenn der Koppler (120) des Anhängers (116) von der Anhängerkupplungsanordnung (118) gelöst ist.

3. Verfahren nach Anspruch 2, wobei der bestimmte Anhängerverbindungsstatus in dem verbundenen Zustand (122) ist, wenn der Luftfederungsdruckdifferenzwert, ΔPAS, größer als ein erster Schwellenwert ist und der Reifendruckdifferenzwert, ΔPT, größer als ein zweiter Schwellenwert ist.

4. Verfahren nach Anspruch 2 oder 3, wobei der Anhängerverbindungsstatus in dem verbundenen Zustand (122) ist, wenn die Summe des Luftfederungsdruckdifferenzwertes, ΔPAS, und des Reifendruckdifferenzwertes, ΔPT, größer als ein dritter Schwellenwert ist.

5. Verfahren nach einem der Ansprüche 1 bis 4, wobei das Fahrzeug (104) ferner ein Triebwerk (105) umfasst und wobei der erste Zeitpunkt, T1, wie durch die Steuereinheit (114) festgelegt, auftritt, wenn die Triebwerkszündung eingeschaltet ist, und wobei der zweite Zeitpunkt, T2, wie durch die Steuereinheit (114) festgelegt, auftritt, nachdem die Triebwerkszündung ausgeschaltet und danach wieder eingeschaltet worden ist, sodass eine Verbindung des Anhängers (116) mit dem Fahrzeug (104), die zwischen dem ersten und dem zweiten Zeitpunkt, T1, T2, auftritt, durch die Steuereinheit (114) detektierbar ist.

6. System zum Bestimmen eines Anhängerverbindungsstatus eines Fahrzeugs, wobei das System (100) Folgendes umfasst:
einen Luftfederungsdrucksensor (106), der dazu konfiguriert ist, Luftdruck in einem Luftfederungssystem (102) des Fahrzeugs (104) zu bestimmen;
einen Reifendrucksensor (110), der dazu konfiguriert ist, Reifendruck innerhalb eines Reifens (112) des Fahrzeugs (104) zu bestimmen;
eine Steuereinheit (114), die kommunikativ mit dem Luftfederungsdrucksensor (106) und mit dem Reifendrucksensor (110) verbunden (115) ist, wobei die Steuereinheit (114) dazu konfiguriert ist, Daten, die sich auf Luftfederungsdruck und auf Reifendruck beziehen, jeweils von dem Luftfederungsdrucksensor (106) und dem Reifendrucksensor (110) zu empfangen, und **dadurch gekennzeichnet, dass** die Steuereinheit (114) ferner zu Folgendem konfiguriert ist:
zu einem ersten Zeitpunkt, T1, Empfangen, von dem Luftfederungsdrucksensor (106), eines ersten Luftfederungsdruckwertes, PAS1, und Empfangen, von dem Reifendrucksensor (110), eines entsprechenden ersten Reifendruckwertes, PT1; und
zu einem zweiten Zeitpunkt, T2, Empfangen, von dem Luftfederungsdrucksensor (106), eines zweiten Luftfederungsdruckwertes, PAS2, und Empfangen, von dem Reifendrucksensor (110), eines entsprechenden zweiten Reifendruckwertes, PT2, wobei der zweite Zeitpunkt, T2, nach dem ersten Zeitpunkt, T1, ist; und
Bestimmen eines Luftfederungsdruckdifferenzwertes, ΔPAS, durch Vergleichen der ersten und der zweiten Luftfederungsdruckwerte, PAS1, PAS2, und eines Reifendruckdifferenzwertes, ΔPT, durch Vergleichen der ersten und der zweiten Reifendruckwerte PT1, PT2, wobei der Anhängerverbindungsstatus basierend auf dem bestimmten Luftfederungsdruckdifferenzwert, ΔPAS, und Reifendruckdifferenzwert, ΔPT, bestimmt wird, wobei der Anhängerverbindungsstatus angibt, ob ein Anhänger (116) mechanisch mit dem Fahrzeug (104) verbunden ist.

7. System nach Anspruch 6, wobei das Fahrzeug (104) eine Anhängerkupplungsanordnung (118) umfasst, die dazu angeordnet ist, sich mit einem Koppler (120) des Anhängers (116) zu verbinden, sodass das Fahrzeug (104) und der Anhänger (116) mechanisch verbunden sind.

8. System nach Anspruch 6 oder 7, wobei der Luftfederungsdrucksensor (106) Teil eines Luftfederungssystems (102) des Fahrzeugs (104) bildet.

9. System nach einem der Ansprüche 6 bis 8, wobei der Anhängerverbindungsstatus in einem verbundenen Zustand (122) ist, wenn der Koppler (120) des Anhängers (116) an der Anhängerkupplungsanordnung (118) angebracht ist, oder in einem nicht verbundenen Zustand (124), wenn der Koppler (120) des Anhängers (116) von der Anhängerkupplungsanordnung (118) gelöst ist.

10. System nach Anspruch 9, wobei die Steuereinheit (114) dazu konfiguriert ist, zu bestimmen, dass der Anhängerverbindungsstatus in dem verbundenen Zustand (122) ist, wenn der Luftfederungsdruckdifferenzwert ΔPAS größer als ein erster Schwellenwert ist und der Reifendruckdifferenzwert ΔPT größer als ein zweiter Schwellenwert ist.

11. System nach Anspruch 9 oder 10, wobei die Steuereinheit (114) dazu konfiguriert ist, zu bestimmen, ob der Anhängerverbindungsstatus in dem verbundenen Zustand (122) ist, wenn die Summe des Luftfederungsdifferenzwertes ΔPAS und des Reifendruckdifferenzwertes ΔPT größer als ein dritter Schwellenwert ist.

12. System nach einem der Ansprüche 6 bis 11, wobei das Fahrzeug (104) ferner ein Triebwerk (105) umfasst und wobei der erste Zeitpunkt, T1, wie durch die Steuereinheit (114) festgelegt, auftritt, wenn die Triebwerkszündung eingeschaltet ist, und wobei der zweite Zeitpunkt, T2, wie durch die Steuereinheit (114) festgelegt, auftritt, nachdem die Triebwerkszündung ausgeschaltet und danach wieder eingeschaltet worden ist, sodass eine mechanische Verbindung des Anhängers (116) mit dem Fahrzeug (104), die zwischen dem ersten und dem zweiten Zeitpunkt, T1, T2, auftritt, durch die Steuereinheit (114) detektierbar ist.

13. System nach Anspruch 12, wobei die mechanische Verbindung des Anhängers (116) mit dem Fahrzeug (104) durch eine Änderung des Anhängerverbindungsstatus, wie basierend auf den Luftfederungs- und Reifendruckdifferenzwerten ΔPAS, ΔPT bestimmt, detektiert wird, wobei die Änderung dazu konditioniert ist, innerhalb eines Zeitraums aufzutreten, der kleiner als ein Schwellenzeitraum ist.

14. System nach Anspruch 12 oder 13, wobei das System (100) dazu konfiguriert ist, Luftfederungsdruckwerte, PAS, und Reifendruckwerte, PT, wiederholt zu bestimmen und wobei die mechanische Verbindung des Anhängers (116) mit dem Fahrzeug (104) durch eine Änderung des Anhängerverbindungsstatus, wie basierend auf Luftfederungs- und Reifendruckdifferenzwerten ΔPAS, ΔPT bestimmt, detektiert wird, wobei die Änderung dazu konditioniert ist, aufzutreten, wenn die Luftfederungs- und/oder die Reifendruckdifferenzwerte ΔPAS, ΔPT über einen Zeitraum konstant sind, der größer als ein Schwellenzeitraum ist.

15. Fahrzeug, umfassend das System nach einem der Ansprüche 6 bis 14.

## Revendications

1. Procédé de détermination d'un état de connexion de remorque pour un véhicule, le véhicule (104) comprenant :
un agencement d'attelage de remorque (118) agencé pour se connecter avec un organe d'accouplement (120) d'une remorque (116) de telle sorte que le véhicule (104) et la remorque (116) sont connectés mécaniquement ;
un capteur de pression de suspension pneumatique (106) configuré pour déterminer la pression d'air dans un système de suspension pneumatique (102) du véhicule (104) ;
un capteur de pression de pneu (110) configuré pour déterminer la pression de pneu à l'intérieur d'un pneu (112) du véhicule (104), et
une unité de commande (114) connectée de manière communicative (115) avec le capteur de pression de suspension pneumatique (106) et avec le capteur de pression de pneu (110), **caractérisé en ce que** le procédé (200) comprend :
la détermination (202), à un premier instant, T1, par le capteur de pression de suspension pneumatique (106) d'une première valeur de pression de suspension pneumatique, PAS1, et, par le capteur de pression de pneu (110) d'une première valeur de pression de pneu correspondante, PT1 ;
la détermination (204), à un second instant, T2, par le capteur de pression de suspension pneumatique (106) d'une seconde valeur de pression de suspension pneumatique, PAS2, et, par le capteur de pression de pneu (110) d'une seconde valeur de pression de pneu correspondante, PT2, le second instant, T2, étant après le premier instant, T1 ;
la réception (206), par l'unité de commande (114), des première et seconde valeurs de pression de suspension pneumatique, PAS1, PAS2 et des première et seconde valeurs de pression de pneu PT1, PT2, pour déterminer (208) une valeur de différence de pression de suspension pneumatique, ΔPAS, et pour déterminer (210) une valeur de différence de pression de pneu, ΔPT ; et
la détermination (212), par l'unité de commande (114), de l'état de connexion de remorque sur la base des valeurs de différence de pression de suspension pneumatique et de pneu déterminées, ΔPAS, ΔPT, l'état de connexion de remorque étant indicatif de si la remorque (116) est connectée mécaniquement au véhicule (104).

2. Procédé selon la revendication 1, dans lequel l'état de connexion de remorque est dans un état connecté (122) si l'organe d'accouplement (120) de la remorque (116) est connecté mécaniquement à l'agencement d'attelage de remorque (118) ou dans un état non connecté (124) si l'organe d'accouplement (120) de la remorque (116) est détaché de l'agencement d'attelage de remorque (118).

3. Procédé selon la revendication 2, dans lequel l'état de connexion de remorque déterminé est dans l'état connecté (122) si la valeur de différence de pression de suspension pneumatique, ΔPAS, est supérieure à une première valeur seuil et la valeur de différence de pression de pneu, ΔPT, est supérieure à une deuxième valeur seuil.

4. Procédé selon la revendication 2 ou 3, dans lequel l'état de connexion de remorque est dans l'état connecté (122) si la somme de la valeur de différence de pression de suspension pneumatique, ΔPAS, et de la valeur de différence de pression de pneu, ΔPT, est supérieure à une troisième valeur seuil.

5. Procédé selon l'une quelconque des revendications 1 à 4, dans lequel le véhicule (104) comprend en outre un moteur (105), et dans lequel le premier instant, T1, se produit, tel que défini par l'unité de commande (114), lorsque l'allumage du moteur est activé, et dans lequel le second instant, T2, se produit, tel que défini par l'unité de commande (114), après que l'allumage du moteur a été coupé et ensuite réactivé de telle sorte qu'une connexion de la remorque (116) au véhicule (104) se produisant entre les premier et second instants, T1, T2 est détectable par l'unité de commande (114).

6. Système de détermination d'un état de connexion de remorque d'un véhicule, le système (100) comprenant :
un capteur de pression de suspension pneumatique (106) configuré pour réaliser la détermination de la pression d'air dans un système de suspension pneumatique (102) du véhicule (104) ;
un capteur de pression de pneu (110) configuré pour réaliser la détermination de la pression de pneu à l'intérieur d'un pneu (112) du véhicule (104) ;
une unité de commande (114) connectée de manière communicative (115) avec le capteur de pression de suspension pneumatique (106) et avec le capteur de pression de pneu (110), dans lequel l'unité de commande (114) est configurée pour recevoir des données relatives à la pression de suspension pneumatique et à la pression de pneu provenant du capteur de pression de suspension pneumatique (106) et du capteur de pression de pneu (110), respectivement, et **caractérisé en ce que** l'unité de commande (114) est en outre configurée pour :
à un premier instant, T1, recevoir à partir du capteur de pression de suspension pneumatique (106) une première valeur de pression de suspension pneumatique, PAS1, et recevoir à partir du capteur de pression de pneu (110) une première valeur de pression de pneu correspondante, PT1 ; et
à un second instant, T2, recevoir à partir du capteur de pression de suspension pneumatique (106) une seconde valeur de pression de suspension pneumatique, PAS2, et recevoir à partir du capteur de pression de pneu (110) une seconde valeur de pression de pneu correspondante, PT2, le second instant, T2, étant après le premier instant, T1, et ;
réaliser la détermination d'une valeur de différence de pression de suspension pneumatique, ΔPAS, en comparant les première et seconde valeurs de pression de suspension pneumatique, PAS1, PAS2, et une valeur de différence de pression de pneu, ΔPT, en comparant les première et seconde valeurs de pression de pneu PT1, PT2, moyennant quoi l'état de connexion de remorque est déterminé sur la base de la valeur de différence de pression de suspension pneumatique déterminée, ΔPAS, et de la valeur de différence de pression de pneu déterminée, ΔPT, l'état de connexion de remorque étant indicatif de si une remorque (116) est connectée mécaniquement au véhicule (104).

7. Système selon la revendication 6, dans lequel le véhicule (104) comprend un agencement d'attelage de remorque (118) agencé pour se connecter avec un organe d'accouplement (120) de la remorque (116) de telle sorte que le véhicule (104) et la remorque (116) sont connectés mécaniquement.

8. Système selon la revendication 6 ou 7, dans lequel le capteur de pression de suspension pneumatique (106) fait partie d'un système de suspension pneumatique (102) du véhicule (104).

9. Système selon l'une quelconque des revendications 6 à 8, dans lequel l'état de connexion de remorque est dans un état connecté (122) si l'organe d'accouplement (120) de la remorque (116) est fixé à l'agencement d'attelage de remorque (118) ou dans un état non connecté (124) si l'organe d'accouplement (120) de la remorque (116) est détaché de l'agencement d'attelage de remorque (118).

10. Système selon la revendication 9, dans lequel l'unité de commande (114) est configurée pour réaliser la détermination que l'état de connexion de remorque est dans l'état connecté (122) si la valeur de différence de pression de suspension pneumatique ΔPAS est supérieure à une première valeur seuil et la valeur de différence de pression de pneu ΔPT est supérieure à une deuxième valeur seuil.

11. Système selon la revendication 9 ou 10, dans lequel l'unité de commande (114) est configurée pour réaliser la détermination de si l'état de connexion de remorque est dans l'état connecté (122) si la somme de la valeur de différence de suspension pneumatique ΔPAS et de la valeur de différence de pression de pneu ΔPT est supérieure à une troisième valeur seuil.

12. Système selon l'une quelconque des revendications 6 à 11, dans lequel le véhicule (104) comprend en outre un moteur (105), et dans lequel le premier instant, T1, se produit, tel que défini par l'unité de commande (114), lorsque l'allumage du moteur est activé, et dans lequel le second instant, T2, se produit, tel que défini par l'unité de commande (114), après que l'allumage du moteur a été coupé et ensuite réactivé de telle sorte qu'une connexion mécanique de la remorque (116) au véhicule (104) se produisant entre les premier et second instants, T1, T2 est détectable par l'unité de commande (114).

13. Système selon la revendication 12, dans lequel la connexion mécanique de la remorque (116) au véhicule (104) est détectée par un changement de l'état de connexion de remorque tel que déterminé sur la base des valeurs de différence de pression de suspension pneumatique et de pneu ΔPAS, ΔPT, le changement étant conditionné pour se produire dans une période de temps qui est inférieure à une période de temps seuil.

14. Système selon la revendication 12 ou 13, dans lequel le système (100) est configuré pour réaliser de manière répétée la détermination de valeurs de pression de suspension pneumatique, PAS et de valeurs de pression de pneu, PT, et dans lequel la connexion mécanique de la remorque (116) au véhicule (104) est détectée par un changement de l'état de connexion de remorque tel que déterminé sur la base de valeurs de différence de pression de suspension pneumatique et de pneu ΔPAS, ΔPT, le changement étant conditionné pour se produire si les valeurs de différence de pression de suspension pneumatique et/ou de pneu ΔPAS, ΔPT sont constantes sur une période de temps qui est supérieure à une période de temps seuil.

15. Véhicule comprenant le système selon l'une quelconque des revendications 6 à 14.
